Europäisches Patentamt

European Patent Office

Office européen des brevets

(19)

(11) Numéro de publication: **0 403 357**

**A1**

# (12) DEMANDE DE BREVET EUROPEEN

(21) Numéro de dépôt: **90401603.7**

(22) Date de dépôt: **12.06.90**

(51) Int. Cl.5: **A01N 1/02, A23L 3/00, A23B 4/06**

(30) Priorité: **14.06.89 FR 8907897**

(43) Date de publication de la demande:
**19.12.90 Bulletin 90/51**

(84) Etats contractants désignés:
**AT BE CH DE DK ES GB IT LI NL SE**

(71) Demandeur: **Blaizat, Claude**
**20, rue des Bluets**
**F- 75011 Paris(FR)**

Demandeur: **ITM ENTREPRISES**
**24, rue Auguste-Chabrières**
**F-75737 Paris Cédex(FR)**

(72) Inventeur: **Joseph, Joel**
**6 Boulevard Berchère**
**F-91150 Etampes(FR)**
Inventeur: **Blaizat, Claude**
**20 rue des Bluets**
**F-75011 Paris(FR)**

(54) **Procédé de conservation à l'état vivant sans immersion d'animaux aquatiques tels que poissons, crustacés, coquillages.**

(57) L'invention concerne un procédé de conservation d'animaux aquatiques tels que des poissons, crustacés, coquillages à l'état vivant sans immersion..

Ce procédé de conservation est réalisé en plusieurs étapes:

a/ abaissement de la pression absolue autour de l'animal jusqu'à une valeur comprise entre 4,5 et 8 millibars.

b/ retour à la pression atmosphérique autour de l'animal,

c/ disposition des animaux dans un emballage comportant une ouverture et,

d/ recouvrement de cette ouverture au moyen d'une membrane d'élastomère silicone l'ensemble étant maintenu ultérieurement à 0° C.

Les animaux aquatiques sont conservés à l'état vivant pendant au moins quinze jours, et peuvent reprendre ensuite une activité normale.

# PROCEDE DE CONSERVATION A L'ETAT VIVANT SANS IMMERSION D'ANIMAUX AQUATIQUES TELS QUE :POISSONS, CRUSTACES, COQUILLAGES.

La présente invention concerne un procédé de conservation d'animaux aquatiques tels que: poissons, crustacés, mollusques, coquillages à l'état vivant, et le dispositif de conservation correspondant.

On sait que l'on peut conserver les animaux aquatiques à l'état vivant par différents moyens; par exemple, on peut les disposer dans des viviers contenant de l'eau renouvelée et traitée en fonction du nombre d'animaux,

On peut également les asperger d'eau. Ces différents procédés offrent l'avantage de conserver la fraîcheur de l'animal aquatique pendant quelques heures voir quelques jours, entre la capture sur le lieu de pêche et leur transport jusqu'au lieu de consommation, ceci permettant au consommateur des centres urbains, consommateurs particulièrement amateurs de ce type de produits, de les consommer dans un état des plus hygiénique et des plus frais possible. Cependant, la conservation de l'état de fraîcheur desdits animaux néccissite une infrastructure plus lourde encore lors du transport.

On voit très souvent des camions sillonnant les routes contenant de tels produits, véhicules dont le rôle est d'apporter le plus rapidement possible ces produits dans le meilleur état possible sur la table du consommateur.

Ces camions sont du type frigorifique.

Lorsqu'on désire consommer des animaux aquatiques vivants, donc dans l'état le plus frais possible, par exemple les coquillages, et plus généralement les crustacés et les poissons, loin des lieux de pêche ou de production, il est préférable de les transporter vivants, de façon qu'ils soient dans un état de fraîcheur indiscutable lors de leur consommation. Pour ceci, jusqu'alors les moyens employés sont des dispositifs dont l'utilisation est lourde et onéreuse. Il est utilisé des viviers montés dans des camions frigorifiques. Ce type de procédé nécessite de transporter en moyenne cinq fois plus d'eau que d'animaux, Le temps de transport entre deux changements de l'eau est de l'ordre de douze heures, le changement d'eau ne peut pas s'effectuer en dehors d'une station d'épuration, car l'eau est chargée des déchets rejetés par les poissons ou crustacés. Pour certains transports, de Bretagne vers l'Espagne, il est même prévu des viviers en eau de mer où les camions sont déchargés, pour que les animaux puissent reprendre des forces dans une eau vive. Ces dispositifs sont onéreux, car il faut d'une part spécialiser le camion et d'autre part y monter des dispositifs de filtration, d'oxygénation et de circulation d'eau.

Pour des transports de homards, aux U.S.A. il est utilisé le dispositif suivant: les crustacés sont rangés dans des cases un par un, l'ensemble est maintenu à une température de l'ordre de 1°C. Pendant toute la durée du transport, de l'eau de mer est pulvérisée sur les animaux, Le moyen de transport doit donc être très spécialisé, et son emploi ne peut être envisagé que pour des animaux à forte valeur ajoutée.

Cependant, à l'heure actuelle, ces procédés de transport apparaissent comme les meilleurs.

La présente invention a pour but de remédier à ces divers inconvénients, et concerne à cet effet, un procédé permettant de conserver les animaux aquatiques à l'état vivant, sans eau, dans un moyen de transport uniquement frigorifique, pendant une période de 1 à 15 Jours au moins.

L'invention concerne donc un procédé de conservation d'animaux aquatiques tels que les poissons, crustacés, coquillages à l'état vivant caractérisé en ce que:

a/ les animaux sont disposés dans un caisson où l'on abaisse la pression absolue jusqu'à une valeur comprise entre 4,5 et 8 millibars tout en conservant une pression partielle d'eau supérieure à 4,5 mb,

b/ on laisse revenir le caisson à la pression atmosphérique,

c/ on enferme les animaux dans un emballage qui comporte sur un de ses côtés une ouverture et,

d/cette ouverture est fermée par une membrane d'élastomère silicone, membrane d'une épaisseur d'environ 50 microns dont la surface est déterminée pour que la concentration de gaz carbonique reste inférieure à 1 pour cent, l'ensemble étant maintenu ultérieurement à 0°C. Ainsi, les animaux sont conservés à l'état vivant, sans activité, dans un emballage pouvant être simple, le transport devenant un simple transport dans des moyens frigorifiques ordinaires avec des délais possibles compatibles avec les logistiques existantes.

La dépression réalisée dans le caisson autour de l'animal a deux effets complémentaires. Le premier est une descente en température rapide, sans risque qu'aucun point de l'animal ne passe en dessous de son point de congélation ce qui entrainerait au moins la mort des cellules, ou tout au moins des modifications irréversibles sur ce type d'animaux. Le deuxième réside dans le fait que lors d'une détente rapide l'oxygène contenu dans les systèmes de circulation inhibe les systèmes nerveux par une sorte d'euphorie équivalent à un phénomène décrit par les plongeurs sous-marins, appelé "ivresse des profondeurs" ou, l'euphorie amenée par un excès d'oxygène dans le mélange respiré.

Les animaux, lors de leur remise à la pression ambiante semblent endormis. Il est possible de dire qu'ils sont en hibernation. Ils ne semblent avoir subi aucune exitations ou énervements extérieurs.

Préférentiellement, pour certains animaux, tels que les poissons, ceux ci sont immergés dans l'eau pendant leur mise sous vide, dans ce cas c'est l'eau qui sera descendue rapidement à 0° C sans aucune évaporation de l'eau de l'animal.

Selon un mode de réalisation particulier, l'eau dans laquelle sont immergés les poissons est suroxygénée,ou à été suroxygénée préalablement. Cette suroxygénation sera faite par maintien des animaux dans une eau saturée en oxygène par simple barbottage. Cette opération présente l'avantage d'augmenter la longévité des animaux et, lors de la remise dans leur milieu naturel, les animaux ont une activité semblant indiquer un meilleur état de santé.

Préférentiellement, l'emballage sera divisé de telle façon que les animaux soient séparés, et que en cas de mort de l'un d'entre eux, aucun liquide issu de ce cadavre ne soit mis en contact avec les autres animaux. En effet, une mort pour une cause indéterminée est possible, et une fermentation se déclare augmentant rapidement le gaz carbonique dans l'emballage. Pour la plupart de ces animaux, la dose létale semble être de 2 pour cent pendant deux à quatre heures. Aussi pour éviter une concentration supérieure de cette dose, la membrane est choisie de façon que cette concentration ne soit pas dépassée en aucun cas, ceci sans qu'il y ait création d'un passage important de vapeur d'eau. La surface est déterminée par l'étude du dégagement gazeux de chaque espèce. Préférentiellement il est utilisé une membrane en élastomère silicone, ce type de membrane donnant un grand débit gazeux par unité de surface et un débit de vapeur d'eau quasiment nul dans les conditions d'emploi. On va maintenant décrire l'invention au moyen d'exemples de mise en oeuvre du procédé de conservation.

Exemple 1

On utilise des crabes péchés recemment qui ont jeûné pendant une courte période dans un vivier. Ces crabes devront être plein, exempts de maladie apparente, et non amputés. On les dispose dans des caisses en polyéthylène munies de séparations, et d'un caillibotis, ceci sur une seule épaisseur. Les caisses sont disposées dans un caisson auquel est relié un ensemble de pompes à vide du type éjecteur de vapeur. La descente en pression est réalisée dans un temps de l'ordre de 10 minutes, et la pression totale de l'appareil est maintenue pendant 20 minutes entre 6;5 et 7,5 millibars. Le caisson est ensuite remis à la pression atmosphérique. Des couvercles munis de membrane en élastomère sont fixés sur les caisses de façon étanche. Les caisses sont alors placées dans une chambre froide dont la température est de 1° C. Six jours après, une partie des caisses ont été ouvertes, 100 % des crabes retrouvaient une activité normale dans le vivier à une température de 8° C duquel ils avaient été préalablement sortis et ceci pour plus de 24 Heures. Quinze jours après, 10% des individus maintenus en chambre froide étaient morts, sans que l'on puisse en déterminer la cause.

Exemple 2

On a placé des truites dites "portion" dans un bac transportable; l'eau a été suroxygénèe pendant une heure. Le bac contenant les truites et l'eau ont été placées dans le même appareil à vide que celui de l'exemple 1, La même descente et maintien en pression ont été réalisés. Les truites sorties de l'eau ont été placées dans un emballage les tenant droites, ceci facilement car leurs mouvements sont pratiquement nuls, chaque truite étant séparée. L'ensemble a été placé dans le même type de caisses que pour les crabes, et dans le même appareil frigorifique. Dix jours après lors de la remise dans une eau froide, aux environ de 6° C, l'activité des animaux est revenue dans la deuxième heure.

Bien que l'on ait décrit plusieurs modes de mise en oeuvre du procédé de conservation selon l'invention, il est bien évident que l'homme de l'art peut apporter les modifications souhaitables, dans la mise en oeuvre du procédé sans pour autant sortir ni du cadre ni de l'esprit de la présente invention.

**Revendications**

1/ Procédé de conservation d'animaux aquatiques, tels les poissons, crustacés, coquillages à l'état vivant sans immersion caractérisé en ce que:

a/ les animaux sont disposés dans un caisson où l'on abaisse la pression absolue jusqu'à une valeur comprise entre 4,5 et 8 millibars, tout en conservant une pression partielle d'eau supérieure à 4,5 millibars;

b/ on laisse revenir le caisson à la pression atmosphérique,

c/ on enferme les animaux dans un emballage comportant une ouverture sur un de ses côtés, et

    d/ cette ouverture est fermée par une membrane d'élastomère silicone, membrane d'une épaisseur d'environ 50 microns dont la surface est déterminée pour que la concentration de gaz carbonique reste inférieure à 1 pour cent, l'ensemble étant maintenu ultérieurement à 0° C.

    2/ Procédé selon la revendication 1 caractérisé en ce que les animaux du type poissons sont immergés dans l'eau lors de l'étape a du procédé de conservation.

    3/ Procédé suivant la revendication 1 caractérisé en ce que l'étape c soit réalisée avant l'étape a.

    4/ Procédé selon la revendication 2 caractérisé en ce que l'eau dans laquelle sont immergés les poissons est suroxygénée.

    5/ Procédé selon la revendication 2 caractérisé en ce que l'eau dans laquelle on a maintenu les animaux a été préalablement suroxygénée.

    6/ Procédé selon la revendication 1 caractérisé en ce que l'emballage est constitué de cloisons formant des casiers séparés.

    7/ Procédé selon la revendication 4 caractérisé en ce que chacun des casiers de l'emballage contient un seul animal.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 202 952  (NEW ZEALAND GOVERNMENT PROPERTY CORP.)<br>* Revendications *<br>--- | 1-7 | A 01 N   1/02<br>A 23 L   3/00<br>A 23 B   4/06 |
| A | FR-A-  371 103  (G. ERLWEIN & E. MARQUARDT)<br>* Résumé *<br>--- | 1-7 | |
| A | DE-A-2 106 586  (TAKEDA CHEMICAL INDUSTRIES LTD)<br>* Revendications *<br>----- | 1-7 | |

**DOMAINES TECHNIQUES RECHERCHES (Int. Cl.5)**

A 01 N
A 01 K
A 23 L
A 23 B

Le présent rapport a été établi pour toutes les revendications

| Lieu de la recherche | Date d'achèvement de la recherche | Examinateur |
|---|---|---|
| LA HAYE | 26-07-1990 | RAVANEL C.M. |